# EUROPEAN PATENT APPLICATION

(11) **EP 4 549 860 A1**
(43) Date of publication of application: **07.05.2025**
(21) Application number: 24209347.4
(22) Date of filing: 29.10.2024
(51) Int. Cl.: F26B 13/00, F26B 21/00, F26B 13/10

(54) **GAS INJECTION NOZZLE FOR DRYING ELECTRODE PLATE AND DRYING APPARATUS FOR ELECTRODE PLATE INCLUDING THE SAME**

(30) Priority: 02.11.2023 KR 20230150265
(71) Applicant: SK Innovation Co., Ltd., Seoul 03188 (KR); SK On Co., Ltd., Seoul 03161 (KR)
(72) Inventor: LEE, Jun Young, 34124 Daejeon (KR); KIM, Dae Hee, 34124 Daejeon (KR)
(74) Representative: Prüfer & Partner mbB Patentanwälte · Rechtsanwälte

(57) **Abstract**

The present disclosure provides a gas injection nozzle (100) for drying electrode plate including: a nozzle body (110) including a first plate (111), a second plate (112), and a partition plate (115), wherein the partition plate (115) divides a flow space (120) formed between the first plate (111) and the second plate (112) into a first flow space (121) opposing the first plate (111) and a second flow space (122) opposing the second plate (112); at least one inlet hole (130) formed in the first plate (111) and configured to allow drying gas to flow into the first flow space (121); at least one communication hole (150) formed in the partition plate (115) and configured to allow the first flow space (121) and the second flow space (122) to communicate with each other; and a plurality of injection holes (140) formed in the second plate (112) and configured to inject drying gas from the second flow space (122) to the outside.

## Description

### TECHNICAL FIELD

The disclosure and implementations disclosed in this patent document generally relate to a gas injection nozzle used to dry an electrode plate and a drying apparatus for the electrode plate including the same. The gas injection nozzle and the electrode plate manufactured by the drying apparatus for the electrode plate including the same in the present disclosure may be widely applied in the field of secondary battery technology, such as pouch-type secondary batteries and square-shaped secondary batteries.

### BACKGROUND

A secondary battery cell is capable of being charged and discharged, unlike primary batteries, and may be applied to devices within various technical fields such as a digital camera, a mobile phone, a laptop computer, a hybrid vehicle, an electric vehicle, and an energy storage device, and the like.

A secondary battery may be classified as a pouch-type secondary battery or a can-type secondary battery, and has a structure in which an electrode assembly and an electrolyte are accommodated inside a case. The electrode assembly has a structure in which electrode plates and separators are alternately stacked. The electrode plate may include a cathode plate and an anode plate. Generally, the electrode plate includes a sheet or film-shaped current collector, and a cathode active material and an anode active material applied to the current collector. For example, the anode plate may be formed by applying the anode active material to a copper sheet, and the cathode plate may be formed by applying a cathode active material to an aluminum sheet. An electrode plate is manufactured through a coating process of coating an active material on the current collector and a drying process of drying the active material. The coating process and the drying process have a significant impact on the quality of secondary batteries.

In the drying process, drying gas such as hot air is injected onto a sheet of the current collector coated with the active material to dry the active material. In the drying process, when a deviation in a flow rate and/or flow velocity of the drying gas varies greatly, depending on the position of the electrode plate, there may be a problem in that the quality of the electrode plate may be not uniform because a degree of drying and drying efficiency vary depending on the position of the electrode plate.

Additionally, when a deviation in the flow rate and/or flow velocity of the drying gas is large, cracks, bending, and the like, may occur in the electrode plate depending on the position of the electrode plate, which may deteriorate the quality of the electrode plate.

### SUMMARY

When a width of an electrode plate is narrow, a distance between a center portion of the electrode plate and both side parts thereof is short, along (based on) a width direction of the electrode plate, and accordingly, a deviation in a flow rate and/or flow velocity between the central portion of the electrode plate and both side parts thereof may not be large. However, when a width of the electrode plate is wide, a large deviation in a flow rate and/or flow velocity may occur between the central portion and both side parts of the electrode plate along(based on) the width direction of the electrode plate. In this case, drying deviation in the width direction of the electrode plate may increase and the quality of the electrode plate may deteriorate.

According to an aspect of the present disclosure, provided is a gas injection nozzle for drying an electrode plate and a drying apparatus for the electrode plate including the same, which may reduce a deviation in a flow rate and/or flow velocity depending on the position of the electrode plate.

According to an aspect of the present disclosure, provided is a gas injection nozzle for drying an electrode plate and a drying apparatus for the electrode plate including the same, which may reduce the deviation in drying efficiency and drying quality depending on the position of the electrode plate.

According to an aspect of the present disclosure, provided is a gas injection nozzle for drying an electrode plate and a drying apparatus for the electrode plate including the same, which may improve the quality of electrode plate even for a wide electrode plate.

The gas injection nozzle for drying an electrode plate and a drying apparatus for the electrode plate including the same may provide a uniform or substantially uniform gas flow rate and/or flow velocity for the entire area of the electrode plate. The gas injection nozzle for drying an electrode plate and a drying apparatus for the electrode plate exhibit significantly improved drying efficiency and drying quality in the entire area of the electrode plate resulting in an improved quality electrode even for large surface area electrodes.

An electrode plate manufactured by a gas injection nozzle for drying an electrode plate and a drying apparatus for the electrode plate including the same, and a battery cell including the same may be widely applied to devices within green technology fields such as an electric vehicle, a battery charging station, and solar and wind power generation using other batteries. Additionally, the electrode plate manufactured according to the present disclosure and the battery cell including the same may be used in an eco-friendly electric vehicle, a hybrid vehicle, and the like, to ameliorate the effects of climate change by suppressing air pollution and greenhouse gas emissions.

A gas injection nozzle for drying electrode plate according to the present disclosure includes: a nozzle body including a first plate, a second plate spaced apart from the first plate in a first direction, and a partition plate disposed to cross between the first plate and the second plate, wherein the partition plate divides a flow space formed between the first plate and the second plate into a first flow space opposing the first plate and a second flow space opposing the second plate; at least one inlet hole formed in the first plate and configured to allow drying gas to flow into the first flow space from the outside of the nozzle body; at least one communication hole formed in the partition plate and configured to allow the first flow space and the second flow space to communicate with each other; and a plurality of injection holes formed in the second plate and configured to inject drying gas from the second flow space to the outside.

In one embodiment, the at least one inlet hole may have a slit shape crossing the first plate in a second direction, which is a longitudinal direction of the nozzle body.

In one embodiment, the at least one communication hole may have a slit shape crossing the partition plate in a second direction, which is a longitudinal direction of the nozzle body.

In one embodiment, the at least one communication hole may be disposed to not face the at least one inlet hole along (based on) the first direction.

In one embodiment, the first plate and the partition plate may have a flat plate shape.

In one embodiment, the nozzle body may include a plurality of side plates configured to connect edges of the first plate and edges of the second plate, and the partition plate is connected to the plurality of side plates.

In one embodiment, the partition plate may include a depression portion depressed toward the second flow space.

In one embodiment, the depression portion may be disposed in a position facing the at least one inlet hole along (based on) the first direction.

In one embodiment, the depression portion may have a shape crossing the partition plate in the second direction, and at least one communication hole may be disposed on both sides of the depression portion.

In one embodiment, a first height (H1) of a portion of the first flow space in which the depression portion is not disposed may have a value smaller than a second height (H2) of a portion of the second flow space in which the depression portion is not disposed, and/or a third height (H3) of the depression portion may have a value smaller than a value of the second height (H2) of the second flow space 122.

In one embodiment, the first direction and the second direction are perpendicular to each other.

In one embodiment, a total cross-sectional area of the at least one communication hole may have a value larger than a total cross-sectional area of the at least one inlet hole, and/or a total cross-sectional area of the plurality of injection holes is a value larger than a value of the total cross-sectional area of the at least one communication hole.

In one embodiment, the at least one communication hole may be provided in an amount greater than the amount of the at least one inlet hole.

In one embodiment, a first height between the first plate and the partition plate has a value equal to or less than a second height between the partition plate and the second plate.

In one embodiment, the injection holes of the plurality of injection holes may have a circular shape.

A drying apparatus for an electrode plate according to the present disclosure may include: a chamber having a gas supply space through which drying gas for drying the electrode plate flows; and a plurality of gas injection nozzles coupled to the chamber to communicate with the gas supply space of the chamber, and the plurality of gas injection nozzles may include: a nozzle body including a first plate, a second plate spaced apart from the first plate in a first direction, and a partition plate disposed to cross between the first plate and the second plate, wherein the partition plate divides a flow space formed between the first plate and the second plate into a first flow space opposing the first plate and a second flow space opposing the second plate; at least one inlet hole formed in the first plate and configured to allow the drying gas to flow into the first flow space from the outside of the nozzle body; at least one communication hole formed in the partition plate and configured to allow the first flow space and the second flow space to communicate with each other; and a plurality of injection holes formed in the second plate and configured to inject drying gas from the second flow space to the outside.

In one embodiment, the plurality of gas injection nozzles may have a shape extending in a second direction, which second direction corresponds to a width direction of the electrode plate, and may be spaced apart from each other in a third direction, which third direction corresponds to a transport direction of the electrode plate, and the first direction, the second direction and the third direction may be perpendicular to each other.

In one embodiment, the chamber may include an inlet port for supplying the drying gas to the gas supply space from the outside of the chamber, and the inlet port may be configured to allow flow of the drying gas along the second direction.

In one embodiment, the chamber may include a first chamber in which drying gas injected onto a first surface of the electrode plate flows, and a second chamber in which drying gas injected onto a second surface of the electrode plate flows, and the plurality of gas injection nozzles may be installed in at least one of the first chamber or the second chamber.

A system for drying an electrode, in particular for drying a cathode and/or an anode of a battery, comprises such an electrode and the gas injection nozzle as defined above, or the drying apparatus as defined above.

A method for preparing a dried electrode plate, in particular for preparing a dried cathode and/or a dried anode of a battery, comprises providing an electrode plate to be dried, and using the gas injection nozzle as defined above, or the drying apparatus as defined above to let drying gas flow for drying the electrode plate.

According to one embodiment of the present disclosure, it may be possible to reduce a deviation in a flow rate and/or flow velocity depending on a position of an electrode plate.

According to one embodiment of the present disclosure, it may be possible to reduce a deviation in drying efficiency and drying quality depending on a position of an electrode plate.

According to one embodiment of the present disclosure, an occurrence of defects such as cracks and bending on both side parts of an electrode plate, even for wide electrode plates, may be reduced, and the quality of the electrode plate may be improved even for wide electrode plates.

### BRIEF DESCRIPTION OF DRAWINGS

Certain aspects, features, and advantages of the present disclosure are illustrated by the following detailed description with reference to the accompanying drawings.
FIG. 1 is a perspective view illustrating a drying apparatus for an electrode plate according to one embodiment.
FIG. 2 is a perspective view illustrating a gas injection nozzle for drying an electrode plate according to one embodiment.
FIG. 3A is a perspective partially cut-away view of a gas injection nozzle for drying an electrode plate according to one embodiment.
FIG. 3B is a cross-sectional view taken along line I-I' of FIG. 1, which illustrates a cross-section of the gas injection nozzle illustrated in FIG. 3A.
FIG. 3C is a schematic diagram illustrating the flow of drying gas in the gas injection nozzle illustrated in FIG. 3B.
FIG. 4A is a perspective partially cut-away view of a gas injection nozzle for drying an electrode plate according to another embodiment.
FIG. 4B is a cross-sectional view taken along line I-I' of FIG. 1, which illustrates a cross-section of the gas injection nozzle illustrated in FIG. 4A.
FIG. 4C is a schematic diagram illustrating the flow of drying gas in the gas injection nozzle illustrated in FIG. 4B.
FIG. 5A is a perspective view illustrating a drying apparatus for an electrode plate according to a comparative example.
FIG. 5B is a cross-sectional view taken along line II-II' of FIG. 5A, which illustrate a state in which a gas injection nozzle is disposed in a drying apparatus for an electrode plate according to a first comparative example.
FIG. 5C is a perspective partially cut-away view of the gas injection nozzle illustrated in FIG. 5b.
FIG. 6 is a cross-sectional view taken along line II-II' of FIG. 5A, which illustrates a state in which a gas injection nozzle is disposed in the drying apparatus for an electrode plate according to a second comparative example.
FIG. 7A is a view illustrating a result of simulating the flow of drying gas for the gas injection nozzle illustrated in FIGS. 3A to 3C.
FIG. 7B is a view illustrating a result of simulating the flow of drying gas for the gas injection nozzle illustrated in FIGS. 4A to 4C.
FIG. 8A is a view illustrating a result of simulating the flow of drying gas to the gas injection nozzle according to the first comparative example illustrated in FIG. 5B.
FIG. 8B is a view illustrating a result of simulating the flow of drying gas to the gas injection nozzle according to the second comparative example illustrated in FIG. 6.

### DETAILED DESCRIPTION

The same reference numeral or symbol written in each accompanying drawing of the specification refers to parts or components that perform substantially the same function. The present disclosure is described using the same reference numeral or symbol even in different exemplary embodiments for easy description and appreciation. In this aspect, although all components having the same reference numeral are illustrated in a plurality of drawings, the plurality of drawings do not necessarily refer to a single exemplary embodiment.

Hereinafter, the singular also includes the plural unless specifically stated otherwise in the phrase. It will be further understood that the terms "comprises," "comprising," "includes" and/or "including," when used herein, specify the presence of stated features, integers, steps, operations, elements, components and/or combinations thereof, but do not preclude the presence or addition of one or more other features, integers, steps, operations, elements, components, and/or groups thereof.

In addition, it should be noted in advance that the expressions such as "above," "upper," "below", "beneath," "lower," "side," "front," and "rear" are based on the direction illustrated in the drawings, and may be expressed differently if the direction of the object is changed.

In addition, in the present specification and claims, terms including ordinal numbers such as "first" and "second" may be used to distinguish between components. These ordinal numbers are used to distinguish the same or similar components from each other, and the meaning of the terms should not be construed as limited by the use of these ordinal numbers. For example, the components combined with these ordinal numbers should not be construed as limiting the order of use or arrangement of the components. If necessary, the ordinal numbers may be used interchangeably.

Hereinafter, the present disclosure will be described in detail with reference to the attached drawings. However, this is merely illustrative and the present disclosure is not limited to the specific embodiments described by way of example.

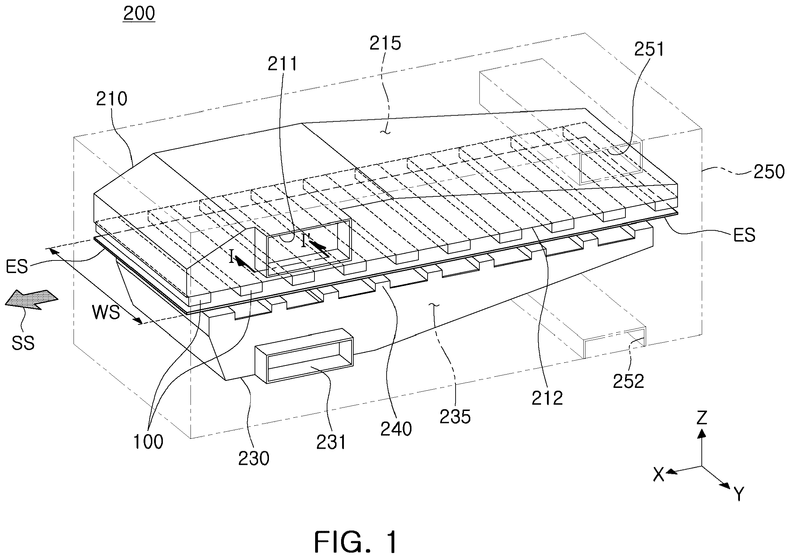

FIG. 1 is a perspective view illustrating a drying apparatus for an electrode plate according to one embodiment.

Referring to FIG. 1, the drying apparatus 200 for an electrode plate according to one embodiment of the present disclosure may include a chamber through which drying gas flows, and a plurality of gas injection nozzles coupled to the chamber. The chamber may include a first chamber 210 and a second chamber 230, and the gas injection nozzle may include a first injection nozzle 100 and a second injection nozzle 240.

An electrode plate ES may include a cathode plate and an anode plate. The electrode plate ES may include a current collector in the form of a sheet or a film, and a cathode active material or an anode active material applied to the current collector. For example, the anode plate may be formed by applying the anode active material to a copper sheet, and the cathode plate may be formed by applying the cathode active material to an aluminum sheet. The electrode plate ES may be manufactured through a coating process of coating the active material and a drying process of drying the active material. The drying apparatus 200 for an electrode plate according to one embodiment of the present disclosure may be applied to the drying process of the electrode plate ES. The drying apparatus 200 for an electrode plate according to one embodiment may be applied to the drying process of the anode plate, but may be also applicable to the drying process of the cathode plate.

A gas supply space in which a drying gas for drying the electrode plate ES flows may be formed in the chamber. The gas supply space may include a first gas supply space 215 formed in the first chamber 210 and a second gas supply space 235 formed in the second chamber 230.

The drying gas may include hot air having a predetermined temperature, but the temperature, composition, and physical properties of the drying gas may be variously changed. The first chamber 210 and the second chamber 230 may be disposed on both surfaces of the electrode plate ES to be dried. For example, the first chamber 210 may be configured to allow drying gas injected onto a first surface of the electrode plate ES to flow, and the second chamber 230 may be configured to allow drying gas injected onto a second surface of the electrode plate ES to flow. The first surface and the second surface of the electrode plate ES may correspond to an upper surface and a lower surface of the electrode plate ES, respectively. The first chamber 210 and the second chamber 230 may be spaced apart from each other by a predetermined interval, and the electrode plate ES may move between the first chamber 210 and the second chamber 230 in a transport direction SS. The transport direction SS of the electrode plate ES may correspond to a third direction (X-direction) .

Each of the first chamber 210 and the second chamber 230 may include an inlet port for supplying the drying gas to the gas supply space from the outside of the chamber. For example, the first chamber 210 may include a first inlet port 211 configured to supply the drying gas to the first gas supply space 215 from the outside of the first chamber 210, and the second chamber 230 may include a second inlet port 231 configured to supply the drying gas to the second gas supply space 235 from the outside of the second chamber 230. Each of the first inlet port 211 and the second inlet port 231 may be disposed on one side of the first chamber 210 and one side of the second chamber 230, respectively, and may be configured to supply the drying gas in a longitudinal direction (or second direction) (Y-direction) of the gas injection nozzle. A supply direction of the drying gas may correspond to a direction, perpendicular to the transport direction SS of the electrode plate ES, that is, a width direction of the electrode plate ES.

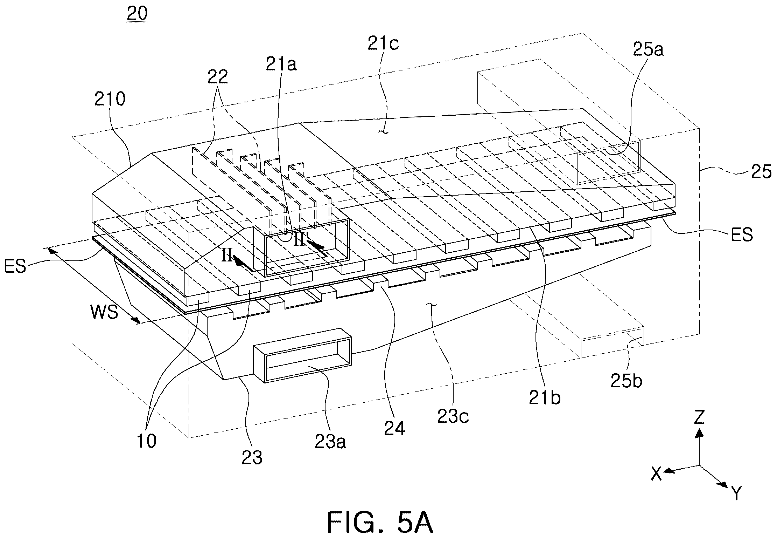

The first chamber 210 and the second chamber 230 may be disposed in a main chamber 250. The main chamber 250 may include an exhaust port for discharging the drying gas injected onto the electrode plate ES through the gas injection nozzle 100 to the outside of the main chamber 250. The exhaust port may include a first exhaust port 251 disposed at the first chamber 210 and a second exhaust port 252 disposed at the second chamber 230. Guide vanes may be disposed in the first exhaust port 251 and the second exhaust port 252 to guide and stabilize a gas flow. For example, the guide vanes installed in the first exhaust port 251 and the second exhaust port 252 may include a shape divided into a plurality of zones, like a guide vane 22 illustrated in FIG. 5A.

The plurality of gas injection nozzles may be coupled to the first chamber 210 and/or the second chamber 230 so as to communicate with the first gas supply space 215 of the first chamber 210 and/or the second gas supply space 235 of the second chamber 230. The gas injection nozzle may include a plurality of first injection nozzles 100 disposed in the first chamber 210 and a plurality of second injection nozzles 240 disposed in the second chamber 230. The first injection nozzle 100 and the second injection nozzle 240 may be disposed in positions corresponding to each other to inject the drying gas from an upper side and a lower side of the electrode plate ES, and may have the same number. However, the arrangement position and the number of the first injection nozzle 100 and the second injection nozzle 240 are not limited thereto.

The first injection nozzle 100 may be installed on a base plate 212 of the first chamber 210. The base plate 212 may be configured as a surface of the first chamber 210 opposing the electrode plate ES. The second injection nozzle 240 may also be installed on a surface of the second chamber 230 opposing the electrode plate ES.

The first injection nozzle 100 and the second injection nozzle 240 may have a shape extending in a width direction (Y-direction) of the electrode plate ES, which is a direction perpendicular to the transport direction SS (i.e., the third direction) of the electrode plate ES. That is, a longitudinal direction (Y-direction) of the first injection nozzle 100 and the second injection nozzle 240 may correspond to the width direction of the electrode plate ES. The plurality of the first injection nozzles 100 may be spaced apart from each other in the third direction (X-direction), which is the transport direction SS of the electrode plate ES. The plurality of the second injection nozzles 240 may be spaced apart from each other in the third direction (X-direction), which is the transport direction SS of the electrode plate ES.

When a width of the electrode plate ES is wide, a length of the first injection nozzle 100 and a length of the second injection nozzle 240 may also become longer. When the length of the first injection nozzle 100 and the length of the second injection nozzle 240 increase, in the longitudinal direction (second direction) (Y-direction) of the injection nozzle, a deviation in a flow rate and/or flow velocity between a central portion and both side parts, or a deviation in a flow rate and/or flow velocity between both side parts may increase. In this case, a drying deviation may increase depending on a width directional (Y-direction) position of the electrode plate ES, and the quality of the electrode plate ES may deteriorate. The drying apparatus 200 for an electrode plate of the present disclosure may reduce the deviation in the flow rate and/or flow velocity by improving the gas injection nozzle 100, thereby improving the quality of the electrode plate ES not only when a width WS of the electrode plate ES is narrow, but also when the width WS of the electrode plate ES is wide. The drying apparatus 200 for an electrode plate of the present disclosure may be applied to an electrode plate ES having a wide width, such as an electrode plate ES having the width WS of 700 mm or more, 1000 mm or more, 1200 mm or more, or 1500 mm or more. However, the width WS of the electrode plate ES applied to the drying apparatus 200 for an electrode plate of the present disclosure may have a value of 700 mm or less.

Meanwhile, the first inlet port 211 and the second inlet port 231 may be configured to supply the drying gas in the second direction (Y-direction), which is the longitudinal direction of the gas injection nozzle. After the drying gas flows into the first chamber 210 and the second chamber 230 in the second direction (Y-direction) and then flows and disperses in the first gas supply space 215 and the second gas supply space 235, the drying gas may flow into the gas injection nozzle and may be injected in a first direction (Z-direction). That is, the first direction (Z-direction), which is an injection direction of the drying gas injected through the gas injection nozzle 100, may be different from the second direction (Y-direction) in which the drying gas flows into the first chamber 210 and the second chamber 230. Accordingly, according to one embodiment of the present disclosure, it may be possible to reduce the influence of the pressure and/or flow velocity of gas flowing into the first chamber 210 and the second chamber 230 on the flow rate and/or flow velocity of gas injected through the gas injection nozzle 100. That is, since the drying gas is injected through the gas injection nozzle 100 after changing a direction thereof, it may be possible to reduce the deviation in the flow rate and/or flow velocity depending on the width directional (Y-direction) position of the electrode plate ES.

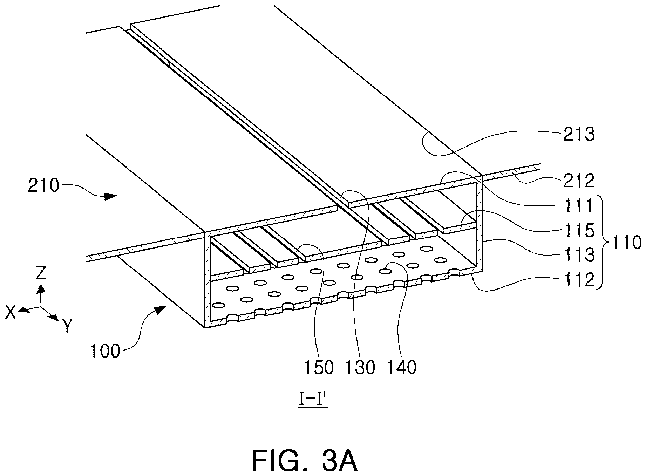

The first injection nozzle 100 and the second injection nozzle 240 may have different configurations, but may also have the same configuration. For example, the first injection nozzle 100 may have a shape including a circular perforated hole (corresponding to an injection hole 140 described below) as shown in FIG. 3A. The second injection nozzle 240 may have a shape including a Coanda nozzle. Alternatively, both the first injection nozzle 100 and the second injection nozzle 240 may have a shape including a circular perforated hole.

A plurality of gas injection nozzles of the present disclosure may be installed in at least one of the first chamber 210 or the second chamber 230. However, for convenience of explanation in the present disclosure below, a case in which a gas injection nozzle is the first injection nozzle 100 installed in the first chamber 210 will be described, but the gas injection nozzle of the present disclosure may also be applied to the second injection nozzle 240 installed in the second chamber 230. Hereinafter, reference numeral `100' of the first injection nozzle 100 will be used for the gas injection nozzle.

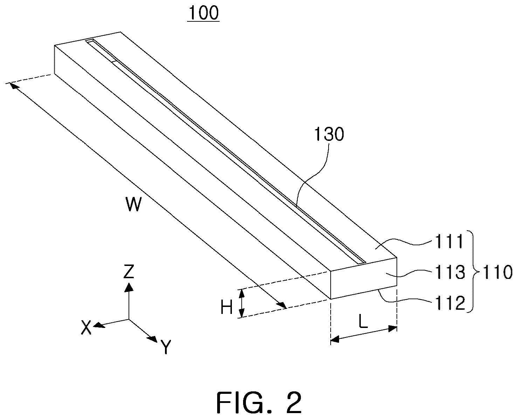

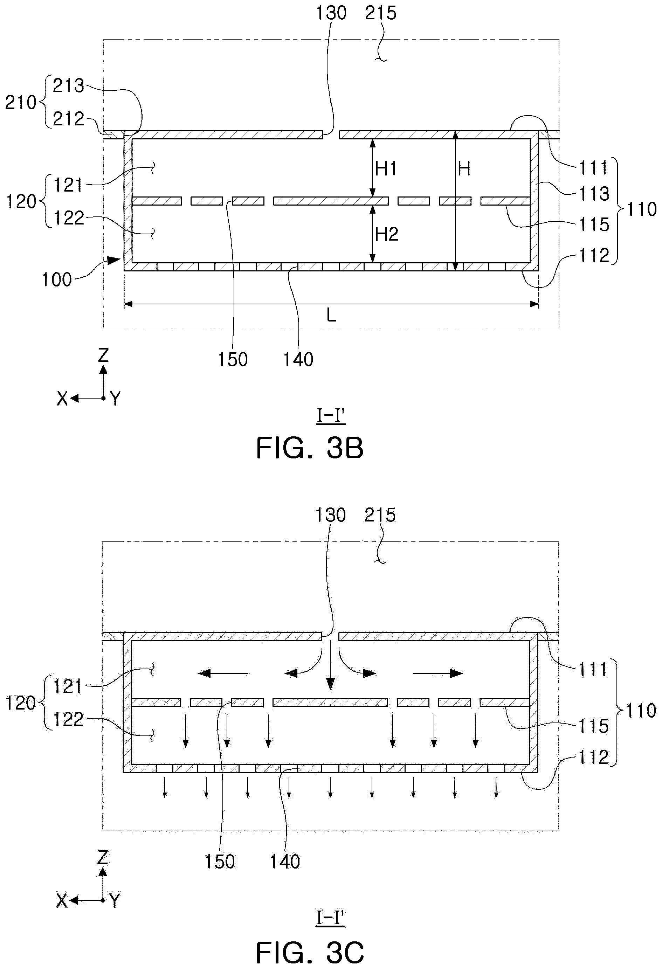

FIG. 2 is a perspective view illustrating a gas injection nozzle 100 for drying an electrode plate according to one embodiment. FIG. 3A is a perspective partially cut-away view of a gas injection nozzle 100 for drying an electrode plate according to one embodiment. FIG. 3B is a cross-sectional view taken along line I-I' of FIG. 1, which illustrates a cross-section of the gas injection nozzle 100 illustrated in FIG. 3A. FIG. 3C is a schematic diagram illustrating the flow of drying gas in the gas injection nozzle 100 illustrated in FIG. 3B.

Referring to FIGS. 2 and 3A to 3C together with FIG. 1, a gas injection nozzle 100 according to one embodiment may be coupled to a chamber (e.g., first chamber 210) configured to supply drying gas for drying an electrode plate ES. In the following description, the chamber will be described using the first chamber 210 as an example. However, when the gas injection nozzle 100 according to one embodiment is applied to a second injection nozzle, 'chamber' may refer to a second chamber 230.

The gas injection nozzle 100 according to one embodiment may include a nozzle body 110. The nozzle body 110 may form a flow space 120 in which drying gas introduced from the outside of the nozzle body 110 flows.

The nozzle body 110 may include a first plate 111, a second plate 112, and a partition plate 115. The nozzle body 110 may include a plurality of side plates 113 configured to connect edges of the first plate 111 and the edges of the second plate 112. The nozzle body 110 may have a shape surrounded by the first plate 111, the second plate 112, and the plurality of side plates 113.

As an example, the nozzle body 110 may have a rectangular parallelepiped shape having a height H in the first direction (Z-direction), a length W in the second direction (Y-direction), and a width L in the third direction (X-direction). When the nozzle body 110 has a rectangular parallelepiped shape, the first plate 111 and the second plate 112 may be disposed on an upper (or top) surface and a lower (or bottom)surface of the nozzle body 110, and four side plates 113 may be disposed on side surfaces of the nozzle body 110. The width L of the nozzle body 110 may correspond to the transport direction SS of the electrode plate ES, and the length W of the nozzle body 110 may correspond to the width direction (Y-direction) of the electrode plate ES.

The first plate 111 may have a flat plate shape, and as an example, may have a square plate shape. The second plate 112 may be spaced apart from the first plate 111 in the first direction (Z-direction). The second plate 112 may have a flat plate shape, and as an example, may have a square plate shape.

The partition plate 115 may be disposed to cross between the first plate 111 and the second plate 112. The partition plate 115 may be parallel to the first plate and second plates 111 and 112. The partition plate 115 may be positioned in a middle position between the first and second plates 111 and 112. The first plate 111 and the partition plate 115 may be spaced apart from each other in the first direction (Z-direction), and the partition plate 115 and the second plate 112 may also be spaced apart from each other in the first direction (Z-direction). The first plate 111 and the partition plate 115 may be spaced apart from each other by a first height H1, and the partition plate 115 and the second plate 112 may be spaced apart from each other by a second height H2. The first height H1 and the second height H2 may be the same as illustrated in the embodiment of FIG. 3B. In another embodiment, not shown, the first and the second height may be different.

The side plate 113 may connect the edge of the first plate 111 and the edge of the second plate 112. The side plate 113 may extend from an edge of the first plate 111 in the first direction (Z-direction). An end of the first plate 111 and an end of the second plate 112 may be connected by the plurality of side plates 113. When the first plate 111 and the second plate 112 have a square plate shape, the first plate 111 and the second plate 112 may be connected by four side plates 113.

A flow space 120 in which drying gas introduced from the first chamber 210 flows may be formed between the first plate 111 and the second plate 112. The flow space 120 may be surrounded by the first plate 111, the second plate 112, and the plurality of side plates 113.

The partition plate 115 may divide the flow space 120 formed between the first plate 111 and the second plate 112 into a first flow space 121 opposing the first plate 111 and a second flow space 122 opposing the second plate 112. That is, the partition plate 115 may restrict the flow of drying gas between the first flow space 121 and the second flow space 122 in spaces excluding a communication hole 150 to be described below.

The partition plate 115 may be connected to the plurality of side plates 113. That is, edges of the partition plate 115 may be disposed to contact the plurality of side plates 113, respectively. Accordingly, flow between the first flow space 121 and the second flow space 122 may be restricted in an edge portion of the partition plate 115.

The nozzle body 110 may be coupled to a chamber (e.g., the first chamber 210). The nozzle body 110 may be coupled to an opening 213 formed in the base plate 212 in the outside of the chamber. The first plate 111 may form the same plane as that of the base plate 212. That is, the first plate 111 and the base plate 212 may be disposed at the same height. However, the arrangement position of the first plate 111 is not limited thereto, and the first plate 111 may be disposed to protrude into the first gas supply space 215 of the first chamber 210.

The nozzle body 110 may include at least one inlet hole 130 formed in the first plate 111, at least one communication hole 150 formed in the partition plate 115, and a plurality of injection holes 140 formed in the second plate 112.

At least one inlet hole 130 formed in the first plate 111 may be configured to allow drying gas to flow into the first flow space 121 from the outside of the nozzle body 110. At least one inlet hole 130 may have a slit shape crossing the first plate 111 in the second direction (Y-direction), which is a longitudinal direction of the nozzle body 110. FIGS. 2 and 3A to 3C illustrate a configuration in which one inlet hole 130 is installed in the first plate 111, but the number of inlet holes 130 installed in the first plate 111 is not limited thereto.

The plurality of injection holes 140 formed in the second plate 112 may be configured to inject the drying gas in the second flow space 122 to the outside. The plurality of injection holes 140 may be formed of a plurality of perforated holes perforated in the second plate 112. The plurality of injection holes 140 may have a circular shape, but the present disclosure is not limited thereto. For example, the shape of the plurality of injection holes 140 may be changed in various manners, such as oval or square. The number and arrangement of the plurality of injection holes 140 are not limited to those illustrated in FIG. 3A, and various changes thereof may be possible.

The at least one communication hole 150 formed in the partition plate 115 may be configured to allow the first flow space 121 and the second flow space 122 to communicate with each other. The at least one communication hole 150 may function as a passage through which the drying gas flows from at least one inlet hole 130 to the plurality of injection holes 140. The drying gas in the first flow space 121 may move to the second flow space 122 through the communication hole 150. The at least one communication hole 150 may have a slit shape crossing the partition plate 115 in the second direction (Y-direction), which is the longitudinal direction of the partition plate 115.

The at least one communication hole 150 may be disposed to not face at least one inlet hole 130 along (based on) the first direction (Z-direction). That is, the inlet hole 130 and the communication hole 150 may be disposed in different positions in the third direction (X-direction). Accordingly, the drying gas that has passed through the inlet hole 130 does not pass directly (in a straight path) through the communication hole 150 in the first direction (Z-direction), but flows in a direction different from the first direction (Z-direction) and then passes through the communication hole 150. Accordingly, the drying gas may pass through the communication hole 150 after the flow of the drying gas is dispersed in the first flow space 121.

The number of at least one communication hole 150 may be larger than the number of at least one inlet hole 130. In the case in which each of the communication hole 150 and the inlet hole 130 includes a slit-shaped hole having the same width, when the number of communication holes 150 is larger than the number of inlet holes 130, a total cross-sectional area of the communication holes 150 may increase. Accordingly, as the drying gas spreads in the second flow space 122 in a state in which flow velocity thereof is lower in the process of passing through the communication hole 150 than in the process of passing through the inlet hole 130, the flow or flow velocity thereof may become uniform.

Additionally, regardless of the number or width of communication holes 150 and inlet holes 130, the total cross-sectional area of at least one communication hole 150 may have a value larger than the total cross-sectional area of at least one inlet hole 130. In this case, as the drying gas spreads into the second flow space 122 in a state in which flow velocity is lower in the process of passing through the communication hole 150 than in the process of passing through the inlet hole 130, the flow or flow velocity thereof may become uniform.

A total cross-sectional area of the plurality of injection holes 140 may be a value larger than a value of the total cross-sectional area of the at least one communication hole 150. Accordingly, the drying gas may pass through the injection hole 140 and may be simultaneously injected onto the electrode plate ES at reduced flow velocity, thereby drying the electrode plate ES.

Additionally, the total cross-sectional area of at least one communication hole 150 may have a value larger than a value of the total cross-sectional area of at least one inlet hole 130, and the total cross-sectional area of the plurality of injection holes 140 may be a value larger than a value of the total cross-sectional area of at least one communication hole 150. Accordingly, as the drying gas sequentially passes through the communication hole 150 and the injection hole 140, the flow velocity thereof may decrease and the flow may be uniformized. However, in the present disclosure, a size of the total cross-sectional area of the plurality of injection holes 140 is not limited to the above-described example.

Meanwhile, in one embodiment illustrated in FIGS. 3A to 3C, the partition plate 115 may be disposed approximately in the center between the first plate 111 and the second plate 112. For example, a first height H1 between the first plate 111 and the partition plate 115 may have a value equal to or less than a second height H2 between the partition plate 115 and the second plate 112. As an example, the first height H1 may have a value between 0.5 and 1 times the second height H2. When the first height H1 is relatively less than the second height H2, since a height of the second flow space 122 increases, the drying gas may be uniformized or dispersed in the second flow space 122 and may then be discharged through the injection hole 140. However, the present disclosure does not exclude a case in which the first height H1 is higher than the second height H2.

In this manner, according to one embodiment of the present disclosure, the drying gas may be injected through the injection hole 140 after the flow or flow velocity is sufficiently uniformized in the first flow space 121 and the second flow space 122 inside the gas injection nozzle 100. Accordingly, the drying gas may be injected onto the electrode plate ES with little, or substantially deviation in flow rate and/or flow velocity in the longitudinal direction (Y-direction) of the gas injection nozzle 100, that is, the width direction of the electrode plate ES. Accordingly, according to one embodiment, even for wide electrode plates ES, defects such as cracks and bending on both side parts of the electrode plate ES may be prevented or reduced from occurring, and even for wide electrode plates ES, the quality of the electrode plate ES may be improved.

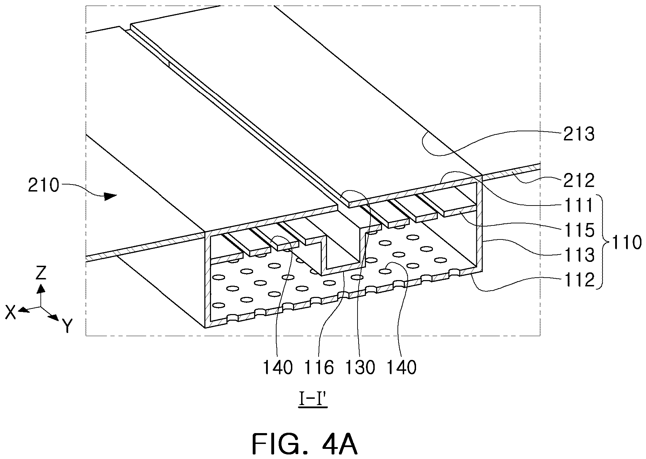

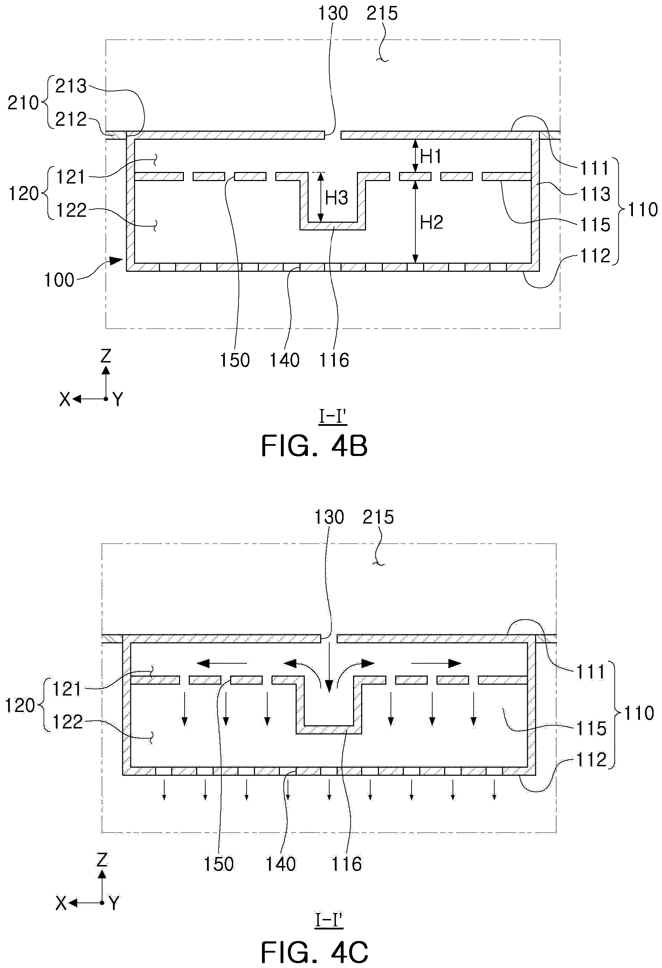

FIG. 4A is a perspective partially cut-away view of a gas injection nozzle 100 for drying an electrode plate according to another embodiment, FIG. 4B is a cross-sectional view taken along line I-I' of FIG. 1, which illustrates a cross-section of the gas injection nozzle 100 illustrated in FIG. 4A, and FIG. 4C is a schematic diagram illustrating the flow of drying gas in the gas injection nozzle 100 illustrated in FIG. 4B.

Similarly to the gas injection nozzle 100 illustrated in FIGS. 3A to 3C, the gas injection nozzle 100 illustrated in FIGS. 4A to 4C may include a nozzle body 110 having a first plate 111, a partition plate 115, and a second plate 112, and may include at least one inlet hole 130 formed in the first plate 111, at least one communication hole 150 formed in the partition plate 115 and a plurality of injection holes 140 formed in the second plate 112. When compared to the gas injection nozzle 100 illustrated in FIGS. 3A to 3C, the gas injection nozzles 100 illustrated in FIGS. 4A to 4C are different in a partial shape of the partition plate 115. Accordingly, a configuration different from the gas injection nozzle 100 illustrated in FIGS. 3A to 3C will be mainly described.

The partition plate 115 may include a depression portion (or pocket) 116 depressed toward the second flow space 122. The depression portion 116 may have a depressed shape from a surface of the partition plate 115 toward the second flow space 122.

The depression portion 116 may have a shape crossing the partition plate 115 in the second direction (Y-direction), which is the longitudinal direction of the partition plate 115. The depression portion 116 may be formed over an entire surface of the partition plate 115. That is, the depression portion 116 may have the same value as a length of the nozzle body 110, but the present disclosure is not limited thereto.

The depression portion 116 may be disposed in a position facing at least one inlet hole 130 formed in the first plate 111 along (based on) the first direction (Z-direction). That is, the inlet hole 130 and the depression portion 116 may be disposed in positions corresponding to each other in the third direction (X-direction) . Accordingly, the drying gas passing through the inlet hole 130 may flow into a space of the depression portion 116, and may hit a surface of the depression portion 116 to change a direction thereof, so that the drying gas may flow into spaces disposed on both sides of the depression portion 116. After the flow of the drying gas may be dispersed to both sides of the depression portion 116, the drying gas may pass through the communication hole 150.

A first height H1 of a portion of the first flow space 121 in which the depression portion 116 is not disposed may have a value smaller than or equal to a value of a second height H2 of a portion of the second flow space 122 in which the depression portion 116 is not disposed. A depth of the depression portion 116 may correspond to a third height H3. The third height H3 of the depression portion 116 may have a value smaller than a value of the second height H2 of the second flow space 122.

As an example, the first height H1 may have a value between 0.5 and 1 times the second height H2. When the first height H1 is relatively smaller than the second height H2, a height of the second flow space 122 may increase and the depth of the depression portion 116 may increase accordingly. In this case, after the drying gas introduced into the first flow space 121 hits the depression portion 116 so that the direction thereof is changed, the drying gas may flow into the second flow space 122 through the communication hole 150, and after the flow of the drying gas is further dispersed and uniformized in the second flow space 122, the drying gas may be discharged through the injection hole 140.

In this manner, according to one embodiment of the present disclosure, the drying gas may be injected through the injection hole 140 after the flow or flow velocity thereof is sufficiently dispersed and/or uniformized in the first flow space 121 and the second flow space 122 in the gas injection nozzle 100. Accordingly, the drying gas may be injected onto the electrode plate ES with little, or substantially deviation in flow rate and/or flow velocity in the longitudinal direction (Y-direction) of the gas injection nozzle 100, that is, the width direction of the electrode plate ES. Accordingly, according to one embodiment, even for wide electrode plates ES, the occurrence of defects such as cracks and bending on both side parts of the electrode plate ES may be reduced, and even for wide electrode plates ES, the quality of the electrode plate ES may be improved.

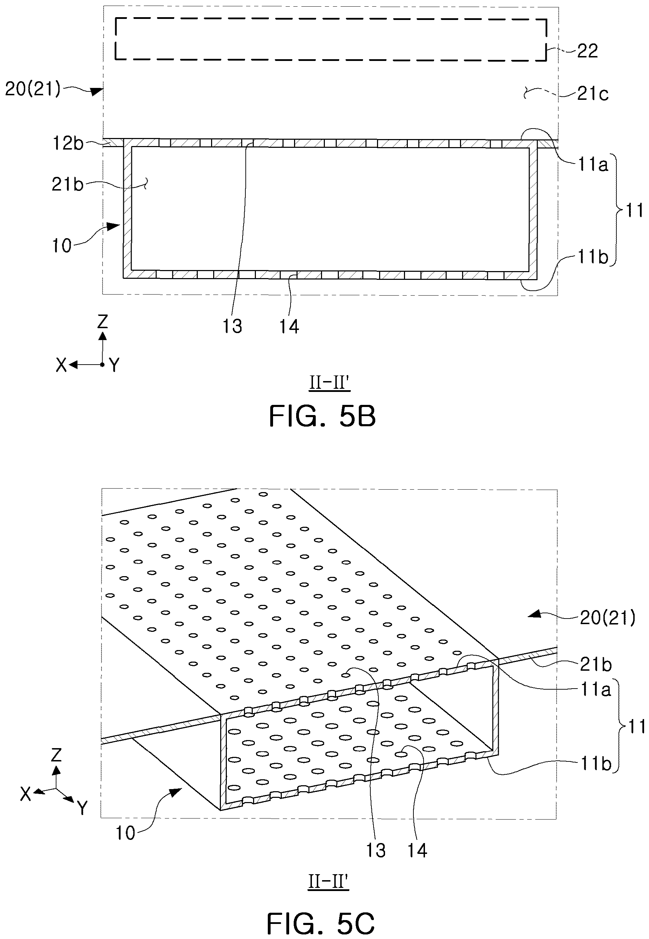

FIG. 5A is a perspective view illustrating a drying apparatus 20 for an electrode plate according to a comparative example, FIG. 5B is a cross-sectional view taken along line II-II' of FIG. 5A, which illustrate a state in which a gas injection nozzle is disposed in a drying apparatus 20 for an electrode plate according to a first comparative example, and FIG. 5C is a perspective partially cut-away view of the gas injection nozzle illustrated in FIG. 5b.

Referring to FIG. 5A, when drying apparatus 20 for an electrode plate to according to the comparative example is compared to the drying apparatus 200 for an electrode plate according to one embodiment illustrated in FIG. 1, there is a difference therebetween in that the guide vane 22 is installed and in the configuration of the gas injection nozzle (or first injection nozzle 10). Detailed descriptions of identical or similar configurations in both drying apparatuses will be omitted.

The drying apparatus 20 for an electrode plate according to the comparative example accommodates a first chamber 21 and a second chamber 23 in a main chamber 25. An electrode plate ES to be dried may be disposed between the first chamber 21 and the second chamber 23.

The first chamber 21 may have a first inlet port 21a through which drying gas is introduced, and the drying gas introduced through the first inlet port 21a may be accommodated in a first gas supply space 21c. The first chamber 21 may have a guide vane 22 installed in a portion of the first gas supply space 21c adjacent to the first inlet port 21a. The guide vane 22 may have a shape divided into a plurality of zones in order to disperse gas introduced into the first inlet port 21a.

The second chamber 23 may have a second inlet port 23a through which the drying gas is introduced, and the drying gas introduced through the second inlet portion 23a may be accommodated in a second gas supply space 23c. The second chamber 23 may also have a guide vane installed in a portion of the second gas supply space 23c adjacent to the second inlet port 23a.

The gas injection nozzle may include a first injection nozzle 10 installed in the first chamber 21 and a second injection nozzle 24 installed in the second chamber 23. The first injection nozzle 10 may be coupled to a base plate 21b of the first chamber 21. The drying gas injected from the gas injection nozzle may dry the electrode plate ES and may then be discharged to the outside of the main chamber 25 through a first exhaust port 25a and a second exhaust port 25b. Even in the comparative example, reference numeral `10' of the first injection nozzle 10 will be used for the gas injection nozzle.

Referring to FIGS. 5B and 5C, a gas injection nozzle 10 for drying an electrode plate according to the first comparative example may include a nozzle body 11 coupled to the base plate 21b of the first chamber 21. The guide vane 22 may be installed in the first gas supply space 21c of the first chamber 21.

The nozzle body 11 may include a first plate 11a in which an inlet hole 13 is formed and a second plate 11b in which an injection hole 14 is formed. The inlet hole 13 may be formed of a plurality of perforated holes in the first plate 11a. The injection hole 14 may be formed of a plurality of perforated holes in the second plate 11b. Each of the inlet hole 13 and the injection hole 14 may be formed as circular holes.

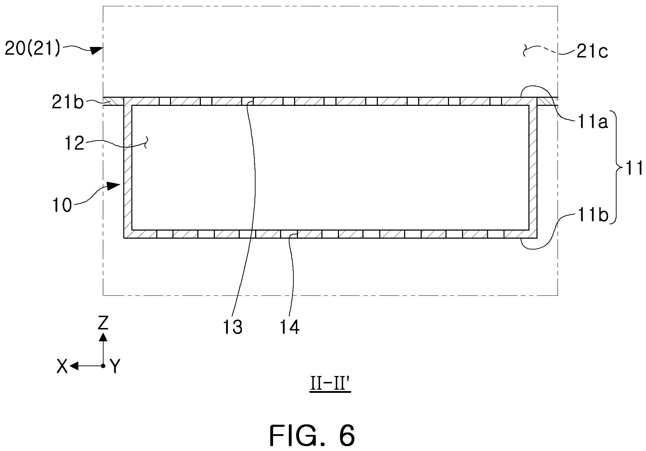

FIG. 6 is a cross-sectional view taken along line II-II' of FIG. 5A, which illustrates a state in which a gas injection nozzle 10 is disposed in the drying apparatus 20 for an electrode plate according to a second comparative example

The drying apparatus 20 for an electrode plate according to the second comparative example illustrated in FIG. 6 illustrates a state in which the guide vane 22 is not disposed in the first gas supply space 21c of the first chamber 21, as compared to the first comparative example illustrated in FIGS. 5A to 5C.

In the drying apparatus 20 for an electrode plate according to the second comparative example illustrated in FIG. 6, since the gas injection nozzle 10 has the same configuration as that of the first comparative example illustrated in FIGS. 5A to 5C, detailed descriptions thereof will be omitted.

Hereinafter, embodiments of the present disclosure will be further described with reference to specific experimental examples. Inventive examples and comparative examples included in the experimental examples are merely illustrative of the present disclosure.

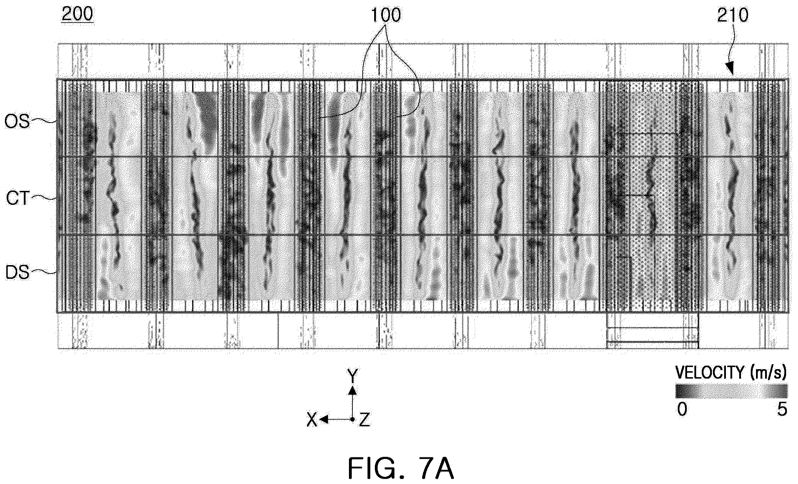

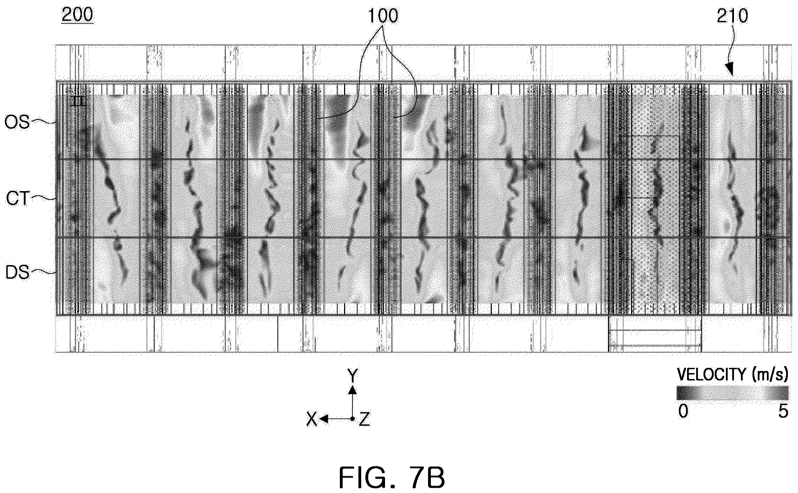

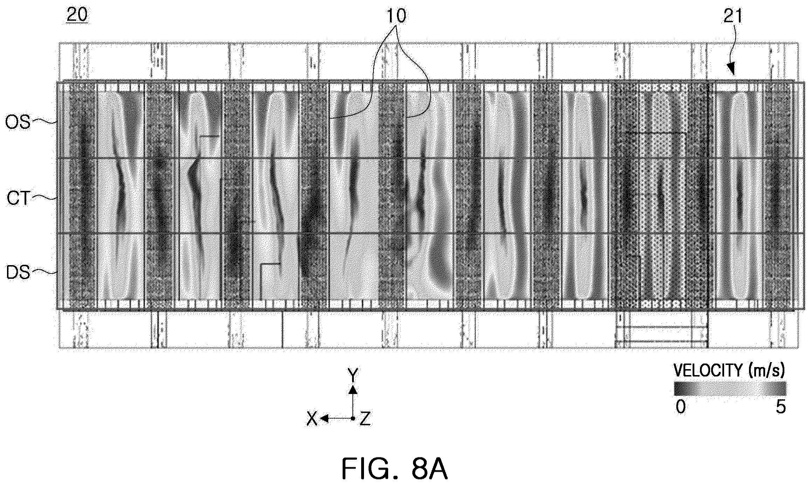

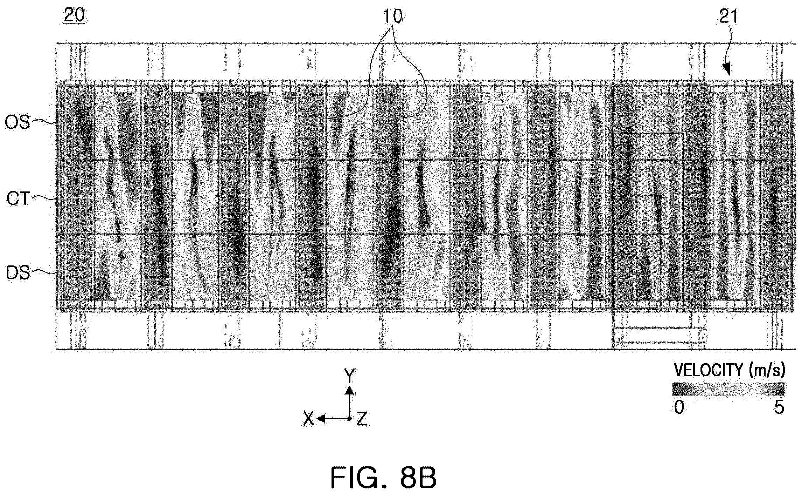

FIG. 7A is a view illustrating a result of simulating the flow of drying gas for the gas injection nozzle 100 illustrated in FIGS. 3A to 3C. FIG. 7B is a view illustrating a result of simulating the flow of drying gas for the gas injection nozzle 100 illustrated in FIGS. 4A to 4C. FIG. 8A is a view illustrating a result of simulating the flow of drying gas to the gas injection nozzle 10 according to the first comparative example illustrated in FIG. 5B. FIG. 8B is a view illustrating a result of simulating the flow of drying gas to the gas injection nozzle 10 according to the second comparative example illustrated in FIG. 6.

FIGS. 7A and 7B, 8A and 8B illustrate flow velocity of an upper side 5 mm away from a surface of an electrode plate when drying gas is injected from gas injection nozzles 100 and 10 disposed in first chambers 210 and 21. A region in which the flow velocity of drying gas is measured may be partitioned into a first part DS adjacent to first inlet ports 211 and 21a in the width direction (Y-direction) of an electrode plate, a second part CT disposed in a central portion of the electrode plate in the width direction (Y-direction), and a third part OS disposed away from the first inlet ports 211 and 21a.

FIG. 7A is a simulation result for the first inventive example in which the gas injection nozzle 100 illustrated in FIGS. 3A to 3C is installed in the first chamber 210 of the drying apparatus 200 for an electrode plate illustrated in FIG. 1. FIG. 7B is a simulation result for the second inventive example in which the gas injection nozzle 100 illustrated in FIGS. 4A to 4C is installed in the first chamber 210 of the drying apparatus 200 for an electrode plate illustrated in FIG. 1.

FIG. 8A is a simulation result for the first comparative example in which the gas injection nozzle 10 illustrated in FIGS. 5B and 5C is installed in the first chamber 21 of the drying apparatus 20 for an electrode plate illustrated in FIG. 5A. FIG. 8B is a simulation result for the second comparative example in which the gas injection nozzle 10 illustrated in FIG. 6 is installed in a state in which the guide vane 22 is not disposed in the first chamber 21 of the drying apparatus 20 of an electrode plate illustrated in FIG. 5A. The first comparative example and the second comparative example have the same configuration of the gas injection nozzle 10, and are different only in whether or not the guide vane 22 is installed.

The inventive examples of FIGS. 7A and 7B and the comparative examples of FIGS. 8A and 8B were tested under the same conditions except for the structure of the gas injection nozzle. However, the first comparative example in FIG. 8A is different from the inventive examples in FIGS. 7A and 7B and the second comparative example in FIG. 8B in that the guide vane 22 is installed.

In the inventive examples of FIGS. 7A and 7B and the comparative examples of FIGS. 8A and 8B, a cross-sectional area of the first inlet ports 211 and 21a disposed in the first chambers 210 and 21 was 321,000 mm² (square millimeter), and an airflow rate thereof was 119 CMM (cubic meter minute) . The simulation was conducted under room temperature conditions. In the inventive examples of FIGS. 7A and 7B and the comparative examples of FIGS. 8A and 8B, a width WS of the electrode plate was approximately 1,500 mm, and 10 gas injection nozzles 100 and 10 were disposed in the first chambers 210 and 21.

The first inventive example of FIG. 7A used the gas injection nozzle 100 illustrated in FIGS. 3A to 3C, and the second inventive example of FIG. 7B used the gas injection nozzle 100 illustrated in FIGS. 4A to 4C.

In the gas injection nozzle 100 of the first inventive example and the gas injection nozzle 100 of the second inventive example, the inlet hole 130, the communication hole 150, and the injection hole 140 of the gas injection nozzle 100 were set to have the same number, shape, and arrangement. However, the gas injection nozzle 100 of the second inventive example has a difference in that the depression portion 116 is provided in the partition plate 115 and installation heights of the partition plates 115 are different.

In the gas injection nozzle 100 of the first inventive example and the second inventive example, the inlet hole 130 included one slit-shaped hole, the communication hole 150 included six slit-shaped holes, and the injection hole 140 included a plurality of perforated holes.

In the gas injection nozzle 100 of the first inventive example and the second inventive example, widths of each slit of the inlet hole 130 and the communication hole 150 were 8 mm, and a total cross-sectional area of the inlet hole 130 was approximately 11,900 mm². Diameters of each injection hole 140 were 10 mm, and a total cross-sectional area of the plurality of injection holes 140 was 53,780 mm² (square millimeters).

In the first comparative example of FIG. 8A and the second comparative example of FIG. 8B, the same gas injection nozzle 10 was disposed. In each gas injection nozzle 10, diameters of each inlet hole 13 were 8 mm, and a total cross-sectional area of the plurality of inlet holes 13 was 36,850 mm² (square millimeter), and diameters of each injection hole 14 was 10 mm, and a total cross-sectional area of the plurality of injection holes 14 was 53,780 mm² (square millimeter).

In the case of the first and second comparative examples illustrated in FIGS. 8A and 8B, when viewed as a whole, the flow velocity of the second part CT disposed in a central portion of the electrode plate in the width direction (Y-direction) was low, while the flow velocity of the first part DS and the third part OS disposed at both sides of the electrode plate in the width direction (Y-direction) tended to be high. That is, in the case of the first and second comparative examples, a large velocity deviation occurred between the widthwise side parts DS and OS and the widthwise central portion CT of the electrode plate.

On the other hand, in the case of the first inventive example and the second inventive example illustrated in FIGS. 7A and 7B, when viewed as a whole, it may be confirmed that a velocity deviation between the second part CT disposed in the central portion of the electrode plate in the width direction (Y-direction) and the first and third parts DS and OS disposed on both sides of the electrode plate in the width direction (Y-direction) was reduced. In addition, it was confirmed that the velocity deviation between the first part DS and the third part OS disposed on both sides of the electrode plate in the width direction was reduced.

That is, in the case of the first inventive example and the second inventive example, it was confirmed that as compared to the first comparative example and the second comparative example, the velocity deviation between the widthwise side parts DS and OS and the widthwise central portion CT of the electrode plate tended to decrease as a whole.

As described above, according to one embodiment of the present disclosure, the drying gas may be injected onto the electrode plate with little, or substantially deviation in the flow rate and/or flow velocity in the width direction of the electrode plate. Accordingly, even for wide electrode plates, the occurrence of defects such as cracks and bending on both side parts of the electrode plate may be reduced, and even for wide electrode plates, the quality of the electrode plate may be improved.

The content described above is merely an example of applying the principles of the present disclosure. Additionally, the above-described embodiments may be implemented by deleting some components, and each embodiment may be implemented in combination with each other.

## Claims

1. A gas injection nozzle (100) for drying electrode plate, comprising:
a nozzle body (110) including a first plate (111), a second plate (112) spaced apart from the first plate (111) in a first direction, and a partition plate (115) disposed to cross between the first plate (111) and the second plate (112), wherein the partition plate (115) divides a flow space (120) formed between the first plate (111) and the second plate (112) into a first flow space (121) opposing the first plate (111) and a second flow space (122) opposing the second plate (112);
at least one inlet hole (130) formed in the first plate (111) and configured to allow drying gas to flow into the first flow space (121) from the outside of the nozzle body (110);
at least one communication hole (150) formed in the partition plate (115) and configured to allow the first flow space (121) and the second flow space (122) to communicate with each other; and
a plurality of injection holes (140) formed in the second plate (112) and configured to inject drying gas from the second flow space (122) to the outside.

2. The gas injection nozzle (100) for drying electrode plate of claim 1, wherein the at least one inlet hole (130) has a slit shape crossing the first plate (111) in a second direction, which is a longitudinal direction of the nozzle body (110), and/or
wherein the at least one communication hole (150) has a slit shape crossing the partition plate (115) in a second direction, which is a longitudinal direction of the nozzle body (110).

3. The gas injection nozzle (100) for drying electrode plate of any one of the preceding claims, wherein the at least one communication hole (150) is disposed not to face the at least one inlet hole (130) along the first direction.

4. The gas injection nozzle (100) for drying electrode plate of any one of the preceding claims, wherein the first plate (111) and the partition plate (115) have a flat plate shape; and/or wherein the nozzle body (110) includes a plurality of side plates (113) configured to connect edges of the first plate (111) and edges of the second plate (112), and the partition plate (115) is connected to the plurality of side plates (113).

5. The gas injection nozzle (100) for drying electrode plate of any one of the preceding claims, having one or more of the following characteristics (i) to (iv), respectively alone or in combination:
(i) the first direction and the second direction are perpendicular to each other;
(ii) a total cross-sectional area of the at least one communication hole (150) has a value larger than a total cross-sectional area of the at least one inlet hole (130);
(iii) a total cross-sectional area of the plurality of injection holes (140) is a value larger than a value of the total cross-sectional area of the at least one communication hole (150); and/or
(iv) the at least one communication hole (150) is provided in an amount greater than the amount of the at least one inlet hole (130).

6. The gas injection nozzle (100) for drying electrode plate of any one of the preceding claims, wherein a first height (H1) between the first plate (111) and the partition plate (115) has a value equal to or less than a second height (H2) between the partition plate (115) and the second plate (112); and/or wherein the injection holes (140) of the plurality of injection holes (140) have a circular shape.

7. The gas injection nozzle (100) for drying electrode plate of any one of the preceding claims, wherein the partition plate (115) includes a depression portion (116) depressed toward the second flow space (122).

8. The gas injection nozzle (100) for drying electrode plate of claim 7, wherein the depression portion (116) is disposed in a position facing the at least one inlet hole (130) along the first direction, and/or wherein the depression portion (116) has a shape crossing the partition plate (115) in the second direction, and at least one communication hole (150) is disposed on both sides of the depression portion (116).

9. The gas injection nozzle (100) for drying electrode plate of claim 7 or 8, wherein the first height (H1) of a portion of the first flow space in which the depression portion is not disposed has a value smaller than the second height (H2) of a portion of the second flow space in which the depression portion is not disposed, and
wherein a third height (H3) of the depression portion (116) has a value smaller than a value of the second height (H2) of the second flow space (122).

10. A drying apparatus (200) for an electrode plate, comprising:
a chamber (210, 230) having a gas supply space (215, 235) through which drying gas for drying the electrode plate flows; and
a plurality of gas injection nozzles (100) according to any one of claims 1 to 9, coupled to the chamber (210,230) to communicate with the gas supply space (215, 235) of the chamber (210, 230).

11. The drying apparatus (200) for an electrode plate of claim 10, wherein the plurality of gas injection nozzles (100) have a shape extending in a second direction, which second direction corresponds to a width direction of the electrode plate, and are spaced apart from each other in a third direction, which third direction corresponds to a transport direction of the electrode plate, and
the first direction, the second direction and the third direction are perpendicular to each other.

12. The drying apparatus (200) for an electrode plate of claim 10 or 11, wherein the chamber (210, 230) includes an inlet port (211, 231) for supplying the drying gas to the gas supply space (215, 235) from the outside of the chamber (210,230), and
the inlet port (211, 231) is configured to allow flow of the drying gas along the second direction.

13. The drying apparatus (200) for an electrode plate of any one of claims 10 to 12, wherein the chamber (210, 230) includes a first chamber (210) in which drying gas injected onto a first surface of the electrode plate flows, and a second chamber (230) in which drying gas injected onto a second surface of the electrode plate flows, and
the plurality of gas injection nozzles (100) are installed in at least one of the first chamber (210) or the second chamber (230).

14. A system for drying an electrode, in particular for drying a cathode and/or an anode of a battery, the system comprising said electrode and the gas injection nozzle (100) according to any one of claims 1 to 9, or the drying apparatus (200) according to any one of claims 10 to 13.

15. A method for preparing a dried electrode plate, in particular for preparing a dried cathode and/or a dried anode of a battery, the method comprising:
providing an electrode plate (ES) to be dried,
using the gas injection nozzle (100) according to any one of claims 1 to 9, or the drying apparatus (200) according to any one of claims 10 to 13 to let drying gas flow for drying the electrode plate (ES).
